# EUROPEAN PATENT APPLICATION

(11) **EP 4 556 218 A1**
(43) Date of publication of application: **21.05.2025**
(21) Application number: 23209590.1
(22) Date of filing: 14.11.2023
(51) Int. Cl.: B32B 17/10, C08J 5/18

(54) **POLYVINYL ACETAL FILMS WITH IMPROVED STIFFNESS**

(71) Applicant: Kuraray Europe GmbH, 65795 Hattersheim am Main (DE)
(72) Inventor: Haerth, Michael, 53859 Niederkassel (DE); Stelzer, Ingo, Potsdam (DE)
(74) Representative: Janßen, Christian Oliver

(57) **Abstract**

The present invention concerns polyvinyl acetal films comprising plasticizer in reduced amount with an improved shear relaxation modulus.

## Description

The present invention concerns polyvinyl acetal films comprising plasticizer in reduced amount with an improved shear relaxation modulus.

Interlayer films comprising polyvinyl acetals are long known as adhesive layers for laminating glass. Especially plasticized polyvinyl butyral (PVB) films are widely used as adhesive layers for glass-glass laminates, e.g. for architectural applications such as building windows.

Glass is being used more and more in today's architecture. Large-scale glass façades play a decisive role in this. Structural glazing differs from conventional glass façades in its appearance and construction. The individual glass elements are only separated from each other by fine shadow gaps or silicone joints. The entire façade presents itself as a smooth surface without interruptions. The insulating glass or parapet elements are not held in place by glazing beads or cover profiles.

In such structural glazing applications, strength, toughness and elasticity of the PVB interlayer films used for the glass laminates are of extremely high importance since the glass itself has to bear the load of the façade. In the case of breakage of the laminated safety glass in the described applications, the interlayer alone needs to be stiff enough to maintain the structural integrity of the element and prevent severe accidents, i.e. it needs to possess good so-called "post glass breakage properties".

In this context, European Standard EN 16613:2019 "Glass in building - Laminated glass and laminated safety glass - Determination of interlayer viscoelastic properties defines certain load duration and temperature ranges, which show that the temperature range between 0 ºC and 40 ºC are of particular importance for European architectural applications.

In order to fulfill such criteria, polyvinyl acetal films with a high stiffness as expressed for example by an improved high shear relaxation modulus G(t) in this temperature range would be advantageous.

In order to increase the stiffness of the polyvinyl acetal films, the amount of plasticizer used could be reduced. To this end, Trosifol^{®} Extra Stiff as well as the Saflex^{™} DG41 PVB interlayer films with reduced amounts of plasticizer (as compared with conventional PVB sheeting products) are commercially available. These products are more rigid than conventional PVB films and are therefore widely used in structural glazing. US 10,889,087 B2 reports a plasticizer-content of 20 parts per 100 parts resin for Saflex^{™} DG41, which is equivalent to around 17 % by weight.

For certain applications in structural glazing even stiffer interlayer films are required. However, further reducing the amount of plasticizer also increases the melt viscosity of the polyvinyl acetal/plasticizer composition used in the melt extrusion process generally employed to prepare the interlayer films. This increase in viscosity leads to higher backpressure and shear forces, i.e. to harsher conditions in the extruder. These harsh conditions lead to partial degradation of the polyvinyl acetal and thus, to an increase in the yellowness of the product, which is inacceptable for the appearance of the glass façades.

Accordingly, US 10,889,087 B2 teaches that a further reduction of plasticizer contained in the polyvinyl acetal would make its processing unacceptable. Instead, the patent proposes the use of polyvinyl acetals with low molecular weights in order to reduce the viscosity in the melt extrusion step. However, use of such low molecular weight polyvinyl acetals is generally associated with a decline in the creep resistance, particularly above the glass transition temperature Tg.

Therefore, there is still a need in the industry for a process to produce polyvinyl acetal interlayer films that have both high shear modulus G(t) in the important temperature range and at the same time acceptable optical quality as measured for example by its yellowness index and processibility.

Accordingly, the objective of the present invention was to provide a film with improved characteristics, wherein the improvements include a higher rigidity, higher shear relaxation and/or shear storage modulus, improved processibility, lower manufacturing costs and/or higher optical quality, especially in terms of less haze and/or less yellowness.

These and other problems have been solved by the present invention.

In a first aspect, the present invention concerns a polyvinyl acetal film comprising at least one plasticizer wherein,
a. the total amount of plasticizer in the polyvinyl acetal film is from 13.0 % by weight to 16.0 % by weight,
b. the weight average molecular weight (Mw) measured by GPC in tetrahydrofuran according to the method described below is equal to or above 170,000 g/mol,
c. the shear relaxation modulus measured at 30 ºC and 5 min is higher than 5 MPa.

### Brief description of the figures:

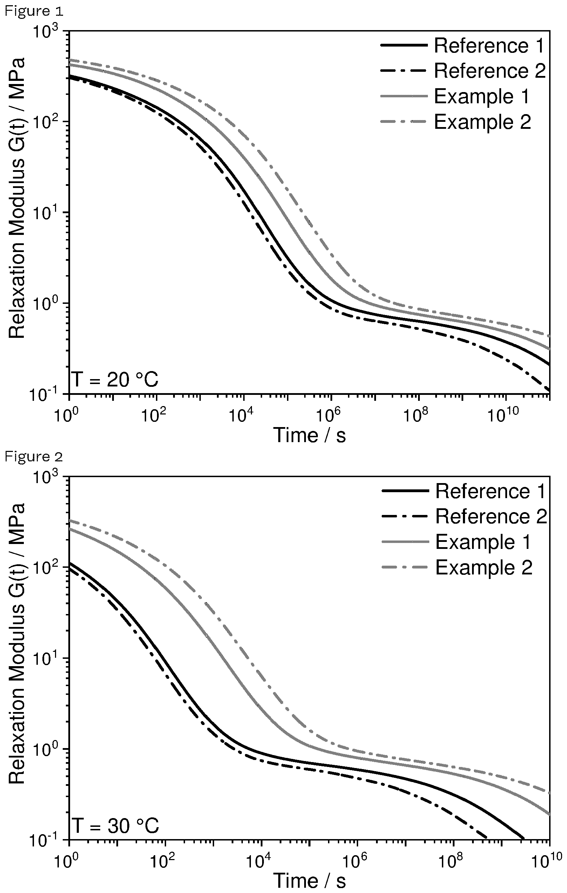

Figures 1 to 4 show the shear relaxation modulus of the examples and reference examples at four different temperatures.

Preferably, the weight average molecular weight (Mw) measured by GPC in tetrahydrofuran according to the method described below is equal to or above 180,000 g/mol, more preferably equal to or above 200,000 g/mol, even more preferably equal to or above 250,000 g/mol and most preferably equal to or above 275,000 g/mol.

Preferably, the weight average molecular weight (Mw) measured by GPC in tetrahydrofuran according to the method described below is equal to or below 500,000 g/mol, more preferably equal to or below 400,000 g/mol, even more preferably equal to or below 350,000 g/mol and most preferably equal to or below 300,000 g/mol.

Preferably, the shear relaxation modulus measured at 30 ºC and 5 min is higher than 7.5 MPa, more preferably higher than 10 MPa, even more preferably higher than 15 MPa, and most preferably higher than 25 MPa. Also preferably, the shear relaxation modulus measured at 30 ºC and 5 min is lower than 200 MPa, more preferably lower than 150 MPa, even more preferably lower than 100 MPa, and most preferably lower than 75 MPa. Specifically, it is higher than 30 and lower than 100 MPa.

Preferably, the shear relaxation modulus measured at 20 ºC and 12 h is higher than 10 MPa, more preferably higher than 12.5 MPa, even more preferably higher than 15 MPa, and most preferably higher than 25 MPa. Also preferably, the shear relaxation modulus measured at 20 ºC and 12 h is lower than 200 MPa, more preferably lower than 150 MPa, even more preferably lower than 100 MPa, and most preferably lower than 75 MPa. Specifically, it is higher than 15 and lower than 50 MPa.

Preferably, the shear relaxation modulus measured at 35 ºC and 3 s is higher than 15 MPa, more preferably higher than 17.5 MPa, even more preferably higher than 20 MPa, and most preferably higher than 25 MPa. Also preferably, the shear relaxation modulus measured at 35 ºC and 3 s is lower than 200 MPa, more preferably lower than 150 MPa, even more preferably lower than 100 MPa, and most preferably lower than 75 MPa. Specifically, it is higher than 15 and lower than 50 MPa.

Also preferably, the thickness of the interlayer film is from 350 to 2500 µm, more preferably from 500 to 2000 µm, and most preferably from 700 to 1750 µm.

The interlayer films according to the present invention contain plasticizer. They may contain one or more than one type of plasticizer. The term "total amount of plasticizer" thus means the combined amounts or any plasticizer present. Preferably, the total amount of plasticizer in the polyvinyl acetal film is from 13.5 % by weight to 15.5 % by weight, more preferably from 14.0 to 15.0 % by weight.

Also preferably, the polyvinyl acetal film has a yellowness index dYID measured according to the method described below 2.0, more preferably from - 2.0 to 2.0, most preferably from - 1.0 to 1.0 and specifically from - 0.5 to 0.5. As the temperature and pressure required for the extrusion of the interlayer films according to the present invention are generally quite high, the yellowness index of the films may be higher than tolerated in the industry. Accordingly, the interlayer films may contain small amounts of suitable colourants. Suitable colourants include derivatives of phthalocyanines, anthraquinones, perylenes as well as titanium oxide or a dye or pigment such as an azo compound or carbon black. Such suitable colourants can be obtained commercially.

Also preferably, the post breakage behaviour of the polyvinyl acetal film determined in a bending tests according to EN 1288-3 at 23 °C and as described below of equal to or more than 10 min, more preferably more than 25 min, even more preferably more than 45 min and most preferably more than 75 min. It is preferably less than 360 min, more preferably less than 250 min and most preferably less than 120 min.

Also preferably, the interlayer film has a glass-transition temperature Tg measured according to the method described below from 50 ºC to 75 ºC, more preferably from 52 ºC to 60 ºC.

The interlayer films according to the present invention are generally prepared by a conventional melt extrusion step known to the skilled person. Melting of the polyvinyl acetal resin powder is carried out at a temperature ranging from the melt temperature of polyvinyl acetal resin up to 260 °C. After the melting step, the extruding and cutting step follows. This step may be carried out by, for example, extruding the melt of polyvinyl acetal resin in the melt extruder followed by cooling and cutting it, or extruding it in the melt extruder into a water bath followed by cutting it.

The interlayer film may contain alkali metal ions; lithium ions are preferred. The total amount of alkali metal salts may be as low as 0.005 % by weight based on the weight of the film. Preferred ranges of alkali metal salt are 0.01 % - 0.1 %; 0.02 - 0.08 %; 0.03 - 0.06 %, each weight % based on the weight of the film.

The interlayer film may additionally comprise alkaline earth ions, but since their effect on adhesion is limited, relatively small amounts as compared to the alkali ion should be used. In a first embodiment of the invention the interlayer film comprises 0 to 100 ppm alkaline earth ions, preferably 10 to 50 ppm.

The polyvinylacetal used in accordance with the invention results in particular from the reaction of at least one polyvinyl alcohol with one or more aliphatic unbranched compounds containing 2 to 10 carbon atoms. To this end, n-butyraldehyde is preferably used and the polyvinyl acetal is polyvinyl butyral.

The interlayer film preferably contains polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The plasticiser present in the interlayer film are selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

In addition, the interlayer film may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The lamination step for producing a laminated glass is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Accordingly, another aspect of the present invention concerns a laminate comprising the polyvinyl acetal film as described above sandwiched between two sheets of glass.

Yet another aspect of the present invention concerns the use of such laminates for the production of structural glazing in glass floors and stairs, curtain walls or parapet glazing.

### Examples

### Interlayer films:

The interlayer films of Example 1 and 2 were produced by film extrusion using the compositions as shown in table 1 on a Leistritz co-rotating twin-screw extruder with a screw length of 592 mm and a length/ diameter (L/D) ratio of 32. Throughput and screw speed were set to 3.5 kg/h and 250 1/min, respectively. In order to obtain a constant mass flow a melt pump was used between extruder and feed block. The temperature profile of the extruder was 20 °C in the feed section, 180 °C in the plasticisation section and 200 °C in the metering section. The temperature of the of the feed block and the dip temperature was set to the 220 °C. The same machine settings were used for both recipes.

The films were extruded through a flat slit die with a slit width of 300 mm and cooled down by chill rolls. The thickness was adjusted by the speed of the chill rolls.

Reference 2 (Saflex^{™} DG41 PVB interlayer film) with reduced amount of plasticizer was commercially obtained.

### Laminate preparation:

Test laminates were produced with conventional 2.1 mm low iron glass (Planiclear^{®}) in an autoclave containing the following steps: 30 min heating phase with pressurization up to 12 bar, 30 min hold time at 12 bar and 140 °C, and 30 min cooling down phase to 40 °C with concomitant release of pressure.

### Test methods:

### PVOH and PVAc content:

The polyvinyl alcohol content and polyvinyl acetate content of PVB were determined in accordance with ASTM D 1396-92. The degree of acetalisation (= acetal/butyral content) can be calculated as the remaining portion from the sum of polyvinyl alcohol content and polyvinyl acetate content determined in accordance with ASTM D 1396-92 needed to make one hundred. Conversion from % by weight into mol % is achieved by formulas known to the person skilled in the art.

### Yellowness Index dYID:

Yellowness Index was measured with a HunterLab ColorQuest XE Spectrophotometer (commercially available from Hunter Associates Laboratory, Inc.) according to ASTM E 313 (Illuminant C, observer angle 2°). The Yellowness Index of the film dYID was obtained by subtracting the YID of the two glass panes used.

### L*, a*, b*, Y-Total, Haze:

L*,a*,b* and Y-Total were measured with a HunterLab ColorQuest XE Spectrophotometer (commercially available from Hunter Associates Laboratory, Inc.) with luminant D65 and an observer angle of 10 °. Haze was measured according ASTM 1003, procedure B.

### Salt Spray Test:

The salt spray test was executed in accordance to DIN EN ISO 9227 for a duration of 3000 hours. Laminates with dimensions of 150 × 100 mm and a glass thickness of 3 mm were used. The width of the edge whitening from the laminate edge was measured after the test.

### Post Breakage behavior:

The post breakage behaviour was determined with bending tests according EN 1288-3 at 23 °C. Fully tempered glass with a thickness of 6 mm and an interlayer thickness of 1.52 mm was used. The upper and lower glass pane was cracked before running the test. A load of 100 N was applied and the time until the test specimen collapses was recorded.

### Glass transition temperature Tg:

The loss factor tan δ was measured using a Anton Paar MCR 302 rheometer and a plate/ plate geometry (diameter: 8 mm). The frequency was set to 1 Hz and the heating rate to 3 K/min. The measurements were performed in the linear range of deformation between -20 and +150 °C. The glass transition temperature was taken from the tan δ maximum. The specimens were dried for 48 hours in a desiccator before performing the experiments.

### Shear Relaxation Modulus G(t) from Dynamical-Mechanical-Analysis:

Frequency sweeps (0.1 Hz - 20 Hz) were conducted within the linear range of deformation between -20 °C and 105 °C with 5 °C steps. The same experimental set-up was used as for the determination of the glass transition temperature.

Master curves were obtained by applying horizontal shift factors to the tan δ results using IRIS Rheo-Hub software. G(t) data were calculated using the same software and following the Baumgärtel and Winter approach (Baumgärtel and Winter 1989).

### Weight average molecular weight (Mw) by GPC:

The weight average molecular weight (Mw)of the polyvinyl acetals was measured using the following conditions:
Solvent: THF (stabilizer included)
Column : KF-806L×1 (Shodex)
Column Temp. : 40 °C
Flow rate: 1.0 mL/min
Sample concentration : 0.1w/v%
Dissolve condition : 40 °C × 2 h
Filtration : 0.45 µm PTFE filter
Injection volume : 100 µL
Standard sample : RI : PMMA-R, Y, G
Measurement time: 20 min
GPC type : REVEAL2
Detector : RI

**Table 1**

| | **Unit** | **Reference 1** | **Example 1** | **Example 2** |
|---|---|---|---|---|
| **Recipe** | | | | |
| PVB | wt.-% | 83 | 85 | 86 |
| PVOH-content | wt.-% | 19.3 | 19.3 | 19.3 |
| PVAc-content | wt.-% | 0.9 | 0.9 | 0.9 |
| 3G8 | wt.-% | 17 | 15 | 14 |
| Songnox 2450 PW | wt.-% | 0.05 | 0.05 | 0.05 |
| Tinuvin 234 | wt.-% | 0.17 | 0.17 | 0.17 |
| Mg-Acetat | wt.-% | 0.0075 | 0 | 0 |
| K-Acetat | wt.-% | 0.0075 | 0 | 0 |
| Colourant | wt.-% | <0.0005 | <0.0005 | <0.0005 |
| | | | | |

| **Properties** | | | | |
|---|---|---|---|---|
| dYID | | -0.03 | -0.57 | -0.4 |
| L* | | 95.99 | 96.22 | 95.94 |
| a* | | -0.56 | -0.43 | -0.4 |
| b* | | 0.54 | 0.18 | 0.26 |
| Haze | | 0.25 | 0.18 | 0.17 |
| Salt Spray behavior | mm | 2 mm | 0 mm | n.d. |
| Post breakage behavior | min | 7.5 | 90 | n.d. |
| Glass transition temperature (Tg) | °C | 47 | 52 | 54 |
| Weight average molecular weight (Mw) | g/mol | 329,000 | 329,000 | 329,000 |

The results shown in table 1 show that examples 1 and 2 with slightly reduced plasticizer content from 17 % by weight (reference samples 1 and 2) to 15 and 14 % by weight, respectively, lead to an expected increase in the glass transition temperature.

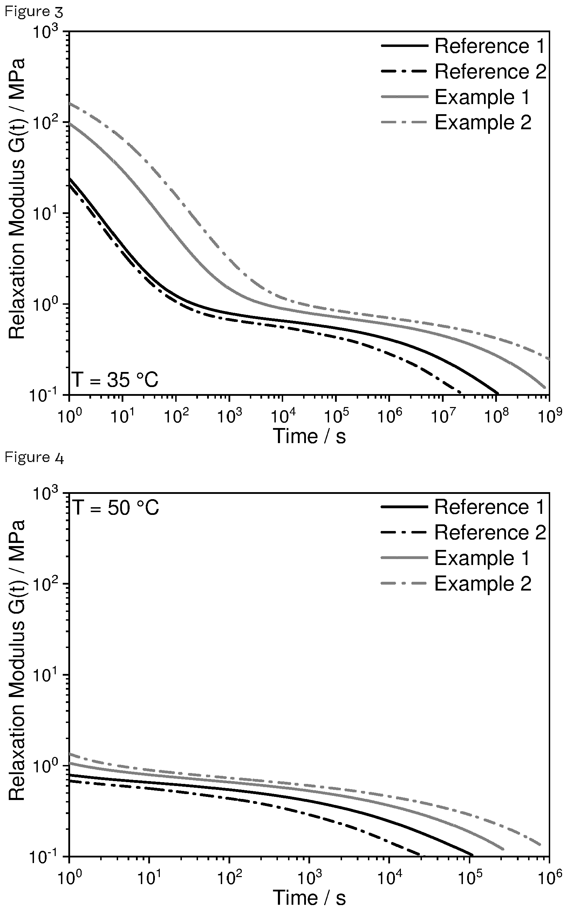

However, the storage modulus in the most relevant temperature range from 20 to 35 ºC (figures 1 to 3) shows an unexpected drastic improvement compared to the reference samples. The results in figure 4 shows that this surprising effect is than again gone at a higher temperature of 50 °-C. These results show that the polyvinyl acetal films according to the present invention can be used to prepare superior structural glazing, especial in a European setting.

## Claims

1. A polyvinyl acetal film comprising at least one plasticizer wherein,
a. the total amount of plasticizer in the polyvinyl acetal film is from 13.0 % by weight to 16.0 % by weight,
b. the weight average molecular weight (Mw) measured by GPC in tetrahydrofuran according to the method described in the description is equal to or above 170,000 g/mol,
c. the shear relaxation modulus measured at 30 ºC and 5 min is higher than 5 MPa.

2. The polyvinyl acetal film according to claim 1 wherein the total amount of plasticizer in the polyvinyl acetal film is from 13.5 % by weight to 15.5 % by weight.

3. The polyvinyl acetal film according to claim 1 or 2 wherein the weight average molecular weight (Mw) measured by GPC in tetrahydrofuran according to the method described in the description is equal to or above 200,000 g/mol.

4. The polyvinyl acetal film according to any one of the claims above wherein the yellowness index dYID of the polyvinyl acetal film measured according to the method described in the description is below 2.0.

5. The polyvinyl acetal film according to any one of the claims above wherein the shear relaxation modulus measure at 20 ºC and 12 h is higher than 10 MPa.

6. The polyvinyl acetal film according to any one of the claims above wherein the shear relaxation modulus measure at 35 ºC and 3 s is higher than 15 MPa.

7. The polyvinyl acetal film according to any one of the claims above wherein the post breakage behaviour determined in a bending tests according to EN 1288-3 at 23 °C and as described in the description of equal to or more than 10 min.

8. The polyvinyl acetal film according to any one of the claims above wherein the width of the edge whitening from the laminate edge determined in the test according to DIN EN ISO 9227 and as described in the description is equal to or less than 1 mm.

9. A laminate comprising the polyvinyl acetal film according to any one of the claims 1 to 8 sandwiched between two sheets of glass.

10. Use of the laminate according to claim 9 for the production of structural glazing in glass floors and stairs, curtain walls or parapet glazing.
